# EUROPÄISCHE PATENTSCHRIFT

(11) **EP 1 628 040 B1**
(45) Veröffentlichungstag und Bekanntmachung des Hinweises auf die Patenterteilung: **10.10.2007**
(21) Anmeldenummer: 05014126.6
(22) Anmeldetag: 30.06.2005
(51) Int. Cl.: F16F 13/10

(54) **Hydraulisch dämpfendes Lager**
Hydraulically-damped support
Support à amortissement hydraulique

(30) Priorität: 16.08.2004 DE 102004039825
(43) Veröffentlichungstag der Anmeldung: 22.02.2006
(73) Patentinhaber: Carl Freudenberg KG, 69469 Weinheim (DE)
(72) Erfinder: Winkler, Gerold, 69488 Birkenau (DE)

(56) Entgegenhaltungen:
- EP-A- 0 656 487
- DE-A1- 10 327 957
- DE-A1- 19 861 063
- US-A- 4 921 232
- US-A1- 2002 180 129
- US-A1- 2005 001 364

## Beschreibung

Die Erfindung betrifft ein hydraulisch dämpfendes Lager mit einem ersten Verankerungsteil, das über einen elastischen Tragkörper an einem zweiten Verankerungsteil abgestützt ist, mit einem mit Dämpfungsflüssigkeit gefüllten Arbeitsraum, der über einen in einem Düsenkörper angeordneten Dämpfungskanal flüssigkeitsleitend mit einem durch einen Rollbalg abgeschlossenen Ausgleichsraum verbunden ist, mit einem den Rollbalg übergreifenden Lagerdeckel, dessen Deckelrand mit dem Rollbalg, dem Düsenkörper und dem Tragkörper formschlüssig verbunden ist.

Derartige hydraulisch dämpfende Lager werden beispielsweise als Motorlager für Kraftfahrzeuge eingesetzt. Sie bewirken eine gute Schwingungsdämpfung sowohl von fahrbahnerregten Schwingungen niedriger Frequenz als auch von motorerregten Schwingungen höherer Frequenz,

Bei bekannten Lagern der eingangs genannten Gattung (DE 37 21 881 A1, DE 198 61 063 A1) steht der mit Dämpfungsflüssigkeit gefüllte Arbeitsraum innerhalb des elastischen Tragkörpers über einen Dämpfungskanal mit einem Ausgleichsraum in Verbindung, der durch einen Rollbalg verschlossen ist. Zwischen dem Arbeitsraum und dem Ausgleichsraum ist ein den Dämpfungskanal enthaltender, eine Trennwand bildender Düsenkörper angeordnet, in dem mindestens eine Durchtrittsöffnung durch eine bewegliche Membran verschlossen ist.

Das zweite Verankerungsteil wird bei den bekannten Lagern durch den den Rollbalg übergreifenden Lagerdeckel gebildet. Die formschlüssige Verbindung des Deckelrandes des Lagerdeckels mit dem Rollbalg, dem Düsenkörper und dem Tragkörper erfolgt dadurch, dass ein mit dem elastischen Tragkörper verbundener metallischer Außenring um den Deckelrand des Lagerdeckels gebördelt ist.

Diese Verbindungsart durch Bördeln macht es erforderlich, sowohl den Außenring des Tragkörpers als auch den Lagerdeckel aus Metall herzustellen. Diese Materialauswahl sowie der Bördelungsvorgang verursachen verhältnismäßig hohe Herstellungskosten. Eine zerstörungsfreie Demontage der miteinander durch Bördelung verbundenen Teile ist nicht möglich.

Aufgabe der Erfindung ist es daher, ein hydraulisch dämpfendes Lager der eingangs genannten Gattung so auszubilden, dass seine Teile in einfache Weise formschlüssig miteinander verbunden werden können, wobei eine zerstörungsfreie Demontage möglich sein soll und die Verwendung von Kunststoff ermöglicht werden soll,

Diese Aufgabe wird erfindungsgemäß dadurch gelöst, dass die Verbindung zwischen dem Lagerdeckel, dem Rollbalg, dem Düsenkörper und dem Tragkörper durch Verklipsung des Tragkörpers mit dem Lagerdeckel erfolgt.

Diese formschlüssige Verbindung durch Verklipsung hat die Vorteile, dass anstelle von Metall Kunststoff als Material für den Lagerdeckel und den Außenring eingesetzt werden kann. Die Verklipsung ist mit geringeren Fertigungs- und Montagekosten verbunden als ein Bördelungsvorgang.

Der Tragkörper, der Düsenkörper und der Rollbalg können durch Lösung der Verklipsung zurückgewonnen werden, ohne dass diese Teile beschädigt oder zerstört werden.

Gemäß einer bevorzugten Ausführungsform der Erfindung ist vorgesehen, dass der Deckelrand des mit dem Tragkörper verklipsten Lagerdeckels von einem umgebördelten Gehäuserand eines den Tragkörper umschließenden, das zweite Verankerungsteil bildenden Lagergehäuses übergriffen wird.

Die gegenüber einer Verklipsung aufwendigere Verbindungsart des Bördelns wird hierbei nur zur Verbindung des schon aus Festigkeitsgründen aus Metall bestehenden Lagergehäuses mit den darin aufgenommenen Teilen verwendet, die ihrerseits in einfacher Weise ausschließlich durch Verklipsung miteinander verbunden sind. Das hydraulisch dämpfende Lager, dessen Teile miteinander verklipst sind, können ohne das teure Lagergehäuse statisch und dynamisch vermessen werden. Etwaige Ausschussteile können ohne das teure und fertigungstechnisch aufwendige Lagergehäuse verworfen werden. Einzelne Teile des Lagers, wie Tragkörper, Düsenkörper und Rollbalg, können durch Lösen der Verklipsung zurückgewonnen werden.

Eine vorteilhafte Ausführungsform der Erfindung besteht darin, dass der Deckelrand des Lagedeckels am Umfang verteilt mehrere Klipshaken aufweist, die einen radial vorspringenden Umfangsrand des Tragkörpers formschlüssig umgreifen. Zweckmäßigerweise ist der Umfangsrand mit einem im elastischen Tragkörper eingebetteten Außenring verbunden. Der vorspringende Umfangsrand bildet eine hochbelastbare Angriffsstelle für die daran angreifenden Klipshaken zur Krafteinleitung in den elastischen Tragkörper.

Stattdessen kann auch ein im elastischen Tragkörper eingebeteter Außenring mit mehreren, am Umfang verteilten Klipshaken verbunden sein, die den Deckelrand des Lagerdeckels formschlüssig übergreifen.

Die Erfindung wird nachfolgend an Ausführungsbeispielen näher erläutert, die in der Zeichnung dargestellt sind. Es zeigt:
Fig. 1 ein hydraulisch dämpfendes Lager im Längsschnitt,
Fig. 2 einen Schnitt längs der Linie II-II in Fig. 1,
Fig. 3 und 4 vergrößerte Teilschnitte im Bereich der Klipsverbindung zwischen dem Lagerdeckel und dem Tragkörper, wobei das Lagergehäuse weggelassen ist, und
Fig. 5-6 in Schnittdarstellungen entsprechend den Fig. 3 und 4 eine abgewandelte Ausführungsform.

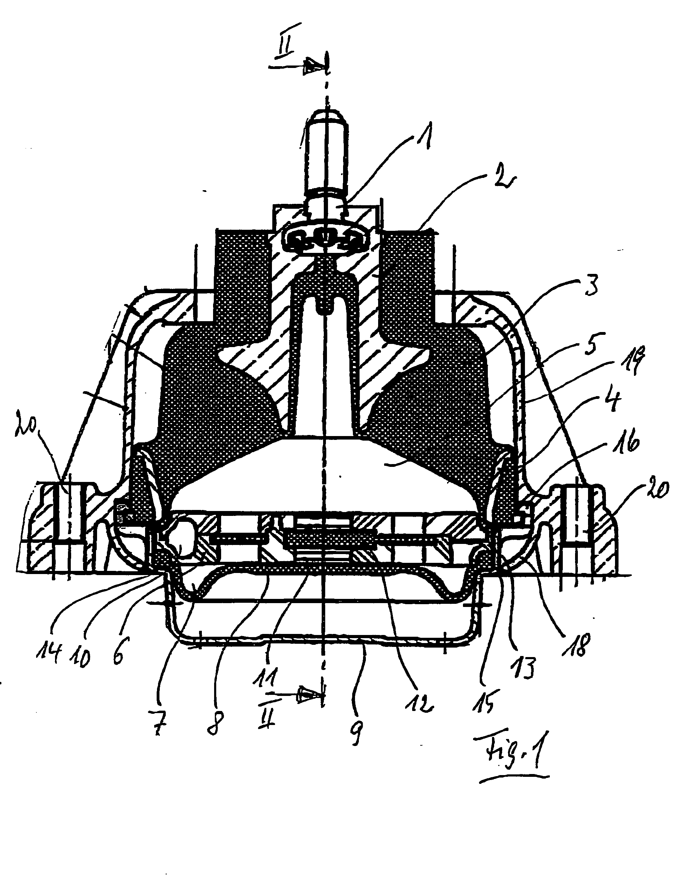

Das in den Fig. 1-4 dargestellte, hydraulisch dämpfende Lager, beispielsweise ein Motorlager im Fahrzeugbau, weist ein der Krafteinleitung dienendes erstes Verankerungsteil 1 auf, das über einen Verdrängerkörper 2 mit einem im wesentlichen glockenförmigen elastischen Tragkörper 3 aus gummielastischem Material verbunden ist.

Am unteren Rand des elastischen Tragkörpers 3 ist ein beispielsweise aus Kunststoff bestehender Außenring 4 eingebettet.

Der Tragkörper 3 umschließt einen mit einer Dämpfungsflüssigkeit gefüllten Arbeitsraum 5, an den sich auf der dem Tragkörper 3 abgekehrten Unterseite ein Dtisenkörper 6 anschließt.

Auf der dem Arbeitsraum 5 abgekehrten Seite des Düsenkörpers 6 befindet sich ein Ausgleichsraum 7, der durch einen gummielastischen Rollbalg 8 abgeschlossen ist. Ein beispielsweise aus Kunststoff bestehender Lagerdeckel 9 übergreift den Rollbalg 8.

Im Düsenkörper 6 ist ein Dämpfungskanal 10 ausgebildet, der eine flüssigkeitsleitende Verbindung zwischen dem Arbeitsraum 5 und dem Ausgleichsraum 7 bildet. Eine Ausnehmung 11 in dem eine Trennwand bildenden Düsenkörper 6 ist durch eine bewegliche Membran 12 verschlossen.

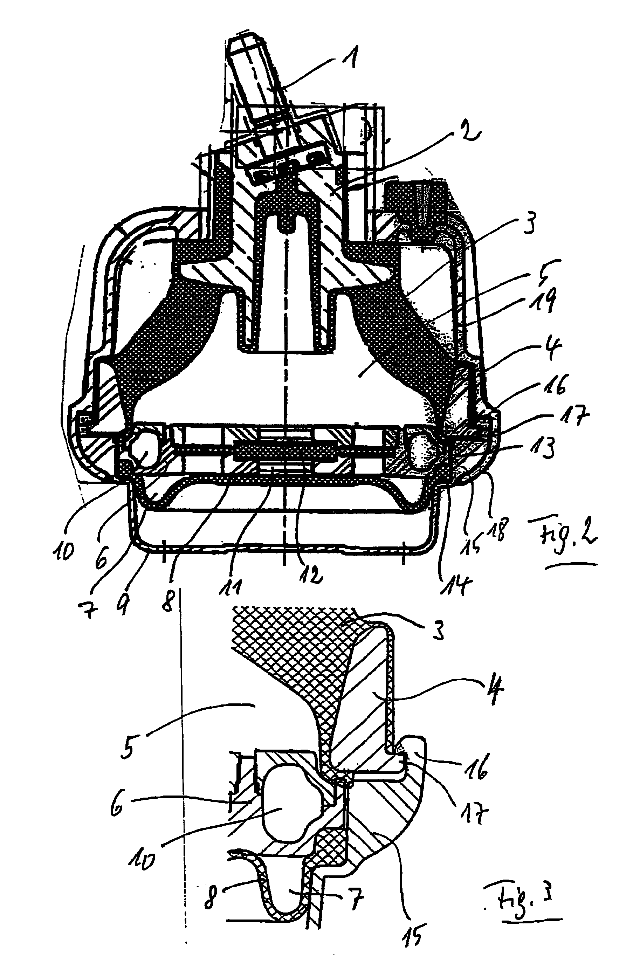

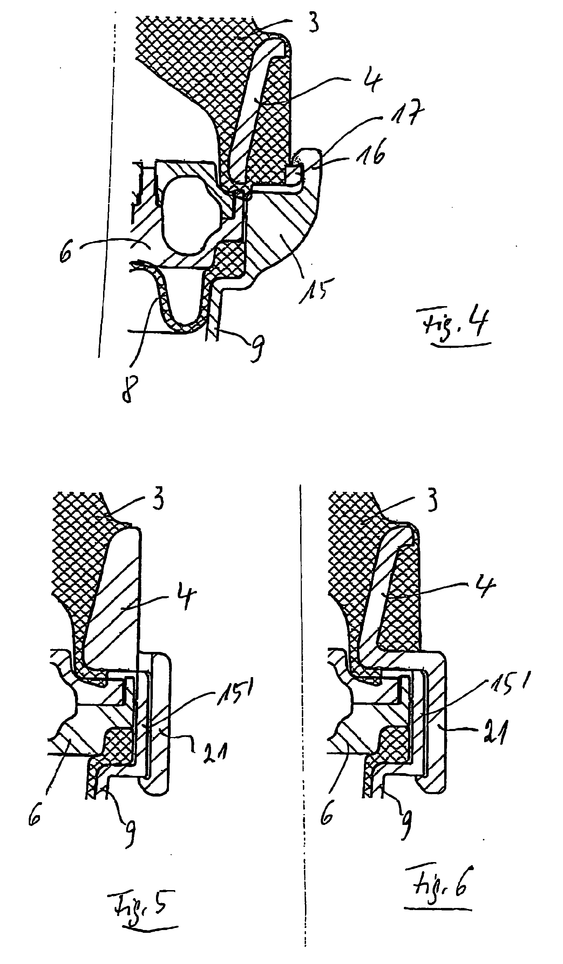

Der Umfangsrand 13 des Düsenkörpers 6 liegt zwischen dem Rand des Tragkörpers 3 und dem wulstartigen Rand 14 des Rollbalgs 8. Ein den Umfang des Lagerdeckeis 9 bildender Deckelrand 15 ist bei der in den Fig. 1-4 dargestellten Ausführungsform mit mehreren am Umfang verteilten Klipshaken 16 versehen (Fig. 3, 4), die einen radial vorspringenden Umfangsrand 17 des Außenrings 4 formschlüssig übergreifen, der in den Rand des elastischen Tragkörpers 3 eingebettet ist. Auf diese Weise wird eine leicht zu montierende und ebenfalls leicht und zerstörungsfrei zu demontierende, formschlüssige Verbindung zwischen dem Lagerdeckel 9 und dem Tragkörper 3 hergestellt, wobei gleichzeitig die Umfangsränder des Düsenkörpers 6 und des Rollbalgs 8 abgedichtet in ihrer vorgeschriebenen Lage gehalten werden.

Wie in den Fig. 1 und 2 dargestellt, wird der Deckelrand 15 des Lagerdeckeis 9, der mit dem Tragkörper 3 verklipst ist, von einem umgebördelten Gehäuserand 18 übergriffen, der Teil eines den Tragkörper 3 umschließenden Lagergehäuses 19 ist Das Lagergehäuse 19 ist mit seitlichen Anschraubstücken 20 versehen und bildet ein zweites Verankerungsteil des hydraulisch dämpfenden Lagers.

Abweichend von dem in den Fig. 1-4 dargestellten Ausführungsbeispiel sind beim Ausführungsbeispiel nach den Fig. 5 und 6 am Umfang verteilte Klipshaken 21 mit dem im elastischen Tragkörper 3 eingebetteten Außenring 4 verbunden. Die Klipshaken 21 übergreifen den Deckelrand 15' des Lagerdeckels 9.

## Patentansprüche

1. Hydraulisch dämpfendes Lager mit einem ersten Verankerungsteil, das über einen elastischen Tragkörper an einem zweiten Verankerungsteil abgestützt ist, mit einem mit Dämpfungsflüssigkeit gefüllten Arbeitsraum, der über einen in einem Düsenkörper angeordneten Dämpfungskanal flüssigkeitsleitend mit einem durch einen Rollbalg abgeschlossenen Ausgleichsraum verbunden ist, mit einem den Rollbalg übergreifenden Lagerdeckel, dessen Deckelrand mit dem Rollbalg, dem Düsenkörper und dem Tragkörper formschlüssig verbunden ist, **dadurch gekennzeichnet, dass** die Verbindung zwischen dem Lagerdeckel (9), dem Rollbalg (8), dem Düsenkörper (6) und dem Tragkörper (3) durch Verklipsung des Tragkörpers (3) mit dem Lagerdeckel (9) erfolgt.

2. Hydraulisch dämpfendes Lager nach Anspruch 1, **dadurch gekennzeichnet, dass** der Deckelrand (15,15') des mit dem Tragkörper (3) verklipsten Lagerdeckels (9) von einem umgebördelten Gehäuserand (18) eines den Tragkörper (3) umschließenden, das zweite Verankerungsteil bildenden Lagergehäuses (19) übergriffen wird.

3. Hydraulisch dämpfendes Lager nach Anspruch 1, **dadurch gekennzeichnet, dass** der Deckelrand (15) des Lagerdeckels (9) am Umfang verteilt mehrere Klipshaken (16) aufweist, die einen radial vorspringenden Umfangsrand (17) des Tragkörpers (3) formschlüssig übergreifen.

4. Hydraulisch dämpfendes Lager nach Anspruch 3, **dadurch gekennzeichnet, dass** der Umfangsrand (17) mit einem im elastischen Tragkörper (3) eingebetteten Außenring (4) verbunden ist.

5. Hydraulisch dämpfendes Lager nach Anspruch 1, **dadurch gekennzeichnet, dass** ein im elastischen Tragkörper (3) eingebetteter Außenring (4) mit mehreren, am Umfang verteilten Klipshaken (21) verbunden ist, die den Deckelrand (15') des Lagerdeckels (9) formschlüssig übergreifen.

## Claims

1. Hydraulically damping bearing having a first anchoring part which is supported on a second anchoring part via an elastic supporting body, having a working space which is filled with damping fluid and is connected in a fluid-conducting manner via a damping channel which is arranged in a nozzle body to a compensation space which is closed by a rolling bellows, having a bearing cover which engages over the rolling bellows and the cover edge of which is connected to the rolling bellows, the nozzle body and the supporting body in a form-fitting manner, **characterized in that** the connection between the bearing cover (9), the rolling bellows (8), the nozzle body (6) and the supporting body (3) is effected by the supporting body (3) being clipped to the bearing cover (9).

2. Hydraulically damping bearing according to Claim 1, **characterized in that** the cover edge (15, 15') of the bearing cover (9) which is clipped to the supporting body (3) is engaged over by a flanged housing edge (18) of a bearing housing (19) which encloses the supporting body (3) and forms the second anchoring part.

3. Hydraulically damping bearing according to Claim 1, **characterized in that** the cover edge (15) of the bearing cover (9) has a plurality of clip hooks (16) which are distributed on the circumference and engage over a radially protruding circumferential edge (17) of the supporting body (3) in a form-fitting manner.

4. Hydraulically damping bearing according to Claim 3, **characterized in that** the circumferential edge (17) is connected to an outer ring (4) which is embedded in the elastic supporting body (3).

5. Hydraulically damping bearing according to Claim 1, **characterized in that** an outer ring (4) which is embedded in the elastic supporting body (3) is connected to a plurality of clip hooks (21) which are distributed on the circumference and engage over the cover edge (15') of the bearing cover (9) in a form-fitting manner.

## Revendications

1. Support à amortissement hydraulique, comprenant une première partie d'ancrage qui est supportée par le biais d'un corps porteur élastique sur une deuxième partie d'ancrage, comprenant un espace de travail rempli d'un liquide d'amortissement qui est connecté par le biais d'un canal d'amortissement disposé dans un corps de buse de manière fluidique à un espace de compensation fermé par un soufflet roulant, avec un couvercle de support venant en prise par le dessus avec le soufflet roulant, dont le bord de couvercle est connecté par engagement positif au soufflet roulant, au corps de buse et au corps porteur, **caractérisé en ce que** la connexion entre le couvercle de support (9), le soufflet roulant (8), le corps de buse (6) et le corps porteur (3) s'effectue par enclipsage du corps porteur (3) avec le couvercle de support (9).

2. Support à amortissement hydraulique selon la revendication 1, **caractérisé en ce que** le bord du couvercle (15, 15') du couvercle de support (9) enclipsé avec le corps porteur (3) est engagé par le dessus par un bord de boîtier replié (18) d'un boîtier de support (19) formant la deuxième partie d'ancrage et entourant le corps porteur (3).

3. Support à amortissement hydraulique selon la revendication 1, **caractérisé en ce que** le bord de couvercle (15) du couvercle de support (9) présente plusieurs crochets d'enclipsage (16) répartis sur sa périphérie, qui viennent en prise par le dessus par engagement positif avec un bord périphérique saillant radialement (17) du corps porteur (3).

4. Support à amortissement hydraulique selon la revendication 3, **caractérisé en ce que** le bord périphérique (17) est connecté à une bague extérieur (4) noyée dans le corps porteur élastique (3).

5. Support à amortissement hydraulique selon la revendication 1, **caractérisé en ce qu'**une bague extérieure (4) noyée dans le corps porteur élastique (3) est connectée à plusieurs crochets d'enclipsage (21) répartis sur la périphérie, qui viennent en prise par le dessus par engagement positif avec le bord de couvercle (15') du couvercle de support (9).
